# EUROPEAN PATENT SPECIFICATION

(11) **EP 2 552 843 B1**
(45) Date of publication and mention of the grant of the patent: **30.05.2018**
(21) Application number: 11705627.5
(22) Date of filing: 02.03.2011
(51) Int. Cl.: C03B 35/18

(54) **HYBRID SLEEVE WITH GLASS OR CERAMIC FIBRES AND METAL FIBRES**
HYBRIDUMMANTELUNG MIT GLAS- ODER KERAMIKFASERN UND METALLFASERN
MANCHON HYBRIDE COMPOSÉ DE FIBRES DE VERRE OU CÉRAMIQUES ET FIBRES DE MÉTAL

(30) Priority: 08.07.2010 EP 10168821; 26.03.2010 EP 10157985
(43) Date of publication of application: 06.02.2013
(73) Proprietor: NV Bekaert SA, 8550 Zwevegem (BE)
(72) Inventor: VERHAEGHE, Tom, B-8540 Deerlijk (BE); CLAES, Raf, 81547 München (DE); DE RIDDER, Frank, B-9308 Hofstade - Aalst (BE)
(74) Representative: Messely, Marc
(86) International application number: PCT/EP2011/053098
(87) International publication number: WO 2011/117048

(56) References cited:
- GB-A- 2 186 279
- US-A- 3 852 862
- US-A- 5 388 432
- US-A- 5 834 382
- US-B1- 6 756 330

## Description

### Technical Field

The invention relates to a sleeve for covering a roller for conveying glass panels in a heating system.

The invention further relates to the use of a sleeve as a cover on one or more rollers of a roller conveyor in a heating furnace for glass panels.

### Background Art

Heating systems for glass panels are known. They are used for heating glass panels up to a sufficient temperature, in general up to or above the softening temperature, in order to subject the panel to a moulding operation, for example a moulding operation in which an initially flat glass panel is curved, to a tempering operation or to a coating operation. Such heating systems comprise a furnace in which a heating zone is defined and a heating device to heat the heating zone. The glass panels to be heated are fed through a feeding port into the furnace. In the furnace the glass panels are heated up to the desired temperature. In the meantime a roller conveyor provided inside the furnace and extending through the heating zone transports the glass panel towards the discharge port of the furnace. In case of moulding the flat glass panel into a curved panel, this moulding can - according to prior art as well as according to the invention - take place inside the furnace before the discharge port (called in furnace bending) or outside the furnace after the discharge port (called out furnace bending).

"In furnace bending" uses in general a die having the desired curvature, wherein vacuum suctions the glass panel into the die. The die is located above the glass. The die generally has a set of suction holes and the glass is sucked onto the die by means of a vacuum applied on the backside of the mould. Depending upon the furnace technology, the suction can be assisted by lift jets below the glass and the glass can be pressed on the mould by a press ring.

"Out furnace bending" uses in general a mould, rollers, a press ring, a quench ring and pairs of rollers which are located in ambient temperature. Depending upon the complexity of the glass one or more of the aforementioned items can be present or not in the out of furnace technology.

It is a known problem that heated glass panels are sensitive to damages like markings and imprints. It is therefore important that the rollers of the roller conveyor have a smooth surface to prevent such damages. A further problem is that, especially in the initial part of the heating, the heating is often uneven resulting in undesired bending. This bending can result in line markings.

US 6,756,330 B1 relates to knitted fabrics used as separation cloth for moulds in the glass bending process. Said fabrics comprise at least partially metal fibres (claim 1) wherein it is indicated (column 2, lines 47-54) that next to the metal fibres, glass fibres, ceramic fibres, carbon fibres, preox-fibers and other high temperature resistant man-made fibres can be used. According to US 5,565,013, the rollers of the roller conveyor are provided with a knitted covering sleeve made from 100% metal wires. The friction coefficient between the glass and the metal is low, which can be beneficial for repositioning the glass in the furnace. The knitted structure is flexible and provides a certain softness, which favours gentle contact between the rollers and the glass, which helps to reduce markings. However, although the temperature in the heating zone is very high, the glass panel still heating up is relatively cold. This causes an instant cooling each time the covering of the roller contacts the glass panel. So the glass is often unevenly heated, which results in a bending of the glass panel and which can cause markings on the glass as the glass travels through the furnace. The roller itself remains hot and immediately heats up the sleeve again when the glass panel continues further in the furnace. This results in fast temperature fluctuations of the sleeve, which in turn cause fast oxidation of the sleeve and low life time of the sleeve. In addition, the metal sleeves loose their tension after a certain time so that the sleeves are no longer tight around the rollers anymore and so that they exhibit sagging. This can cause torsion of the sleeve around the roller, which can result in an undulation of the sleeve.

Other known coverings for conveyor rolls comprise silica or alumina fibres. Each of these products has its own disadvantages. Typically in the first heating zones of a furnace, temperatures are more elevated and may reach up to 710 °C or more. Aromatic fibres do not withstand these temperatures. Also silica fibres degrade fast at these temperatures. And glass fibre sleeves are difficult to mount. Alumina fibres are very expensive.

In addition, glass fibres and silica fibres have mediocre mechanical strength, which frequently leads to local fractures of a few yarns. These fractures start in isolated places but risk to propagate rapidly throughout the sleeve so that the glass panel eventually rests on a bare roller.

### Disclosure of the invention

It is an object of the present invention to mitigate the drawbacks of the prior art.

It is further object of the present invention to provide for a covering of a conveyor roll which has an increased life time.

According to a first aspect of the present invention, there is provided a sleeve for covering a roller for conveying glass panels. The sleeve is a fabric, the fabric is a tubular fabric made out of yarns, the yarns are comprising both glass or ceramic fibres and metal fibres. Preferably, the fabric comprises between 10 weight per cent and 50 weight per cent glass fibres or ceramic fibres, the remainder being metal fibres such as steel fibres. Most preferably, the fabric comprises between 25 and 40 weight per cent glass fibres and / or ceramic fibres, e.g. between 28 wt % and 36 wt % glass fibres and / or ceramic fibres. Examples are 31-33 wt% glass and 67-69 wt% stainless steel.

Fabrics comprising both glass and metal fibres are known, as such. Such a known fabric is used for bending the glass panel in the mould. Experience with these fabrics has shown that they have a shorter life time than a fabric comprising 100% metal fibres. This shorter life time is expected due to the lower impact resistance of glass fibres, particularly of the E-glass fibres.

In contrast to this known experience, it has surprisingly be found that the lifetime of the fabric sleeve according to the invention is considerably higher than the lifetime of a conventional fabric covering of 100% metal (stainless steel) fibres. Indeed, in a particular case, conventional 100% metal coverings had a lifetime of only about 2/3 weeks, whilst the covering according to the invention had a life time of more than 2 months.

The glass or the ceramic or a combination of both in the sleeve (fabric covering) dampens the cyclical temperature changes which the roller covering experiences at each pass of a glass panel. Taking into account that friction between metal and the glass panel is low, the metal provides for low friction between the cover of the roller and the glass panel. Further, the metal fibres provide strength to the covering and prevent cutting in the covering by the glass panel. The glass fibres do not come out of the covering. Further, pure metal coverings loose their tension after time, resulting in the covering not being tight around the roller anymore which results in sagging, which in turn causes torsion of the covering around the roller. The resulting waves in the metal covering cause defects in the glass panel and rollers have to be replaced. In the sleeve covering according to the invention, the glass compensates for the resulting sagging of the covering and keeps the covering tight around the roller.

The sleeve according to the present invention preferably has one or more yarns. Each yarn has one or more bundles, each of the one or more bundles comprises both:
- glass fibres and / or ceramic fibres; and
- metal or steel fibres.

In a preferable embodiment according to the invention, the sleeve has a fabric with one or more yarns. Each yarn has three bundles: one bundle comprises metal or steel fibres, the other two bundles comprising glass fibres and / or ceramic fibres.

In this preferable embodiment, the two bundles with the glass fibres may or may not be twisted with each other.

The bundle with the metal or steel fibres may or may not be twisted with the bundles with the glass fibres.

The fabric used for the sleeve according to the invention can be a non woven fabric of blends of glass/ceramic fibres and metal fibres, a needle punched fabric of blends of glass/ceramic fibres and metal fibres, a braided fabric of yarns, a woven fabric of yarns, or preferably a knitted fabric of yarns. The fabric can be a tubular fabric. It can be a circular fabric.

A knitted structure with glass fibres provides softness, resulting in reduction of damages to the glass panel. According to further implementations of this embodiment:
- the knitted structure is a weft knitted structure; and/or
- the knitted structure is a warp knitted structures; and/or
- the knitted structure is a circular knitted structure; and/or;
- the knitted structure is a single bed knitted structure; and/or
- the knitted structure is a double bed weft knitted structure and/or
- the knitted structure is a 1/1 knitted structure (in which 1/1 stands for 1 knit, 1 purl).

In another preferable embodiment of the invention, the sleeve is a knitted fabric which comprises yarn wherein the yarn comprising at least 3 fibre bundles. The yarn comprises at least one fiber bundle comprising metal fibers. Each of the fiber bundles are defined by an equivalent bundle diameter. The equivalent bundle diameter of each of the fiber bundles in the yarn are equal to each other or differ at most 40%. The metal fiber bundles or single yarns are defined by an equivalent bundle diameter. The equivalent bundle diameter is to be understood as the diameter of an imaginary bundle having a circular radial cross section, which cross section has a surface area identical to the equivalent fiber diameter multiplied by the amount of fibers in the bundle or single yarn. The term "equivalent fiber diameter" of a particular fiber is to be understood as the diameter of an imaginary fiber having a circular radial cross section, which cross section having a surface area identical to the average of the surface areas of cross sections of the particular fiber.

In a preferred embodiment, the equivalent bundle diameter of the different bundles or single yarns in the yarn are differing maximally 30%, more preferably maximally 20% and even more preferably maximally 10%. The fiber bundles, of which at least one contains metal fibers, can be intimately blended and plied to a three or more plied yarn or the yarn can be a three- or more plied yarn, where some or all of the bundles or single yarns are made out of one fibre type. By plying yarns, it is meant that two or more bundles or yarns are given a torsion round the direction of the axes of the bundles or yarns resulting in a plied yarn. Alternatively, the yarn can be assembled prior to knitting by bundling at least 3 fiber bundles or single yarns, or the bundles or single yarns can be fed separately during knitting in order to obtain a yarn with more than three yarn bundles. In another alternative embodiment, the yarn can be produced by assembling already plied yarns.

In a more preferred embodiment, the yarn used in the knitted fabric is build from 3, 4, 5, 6, 7, 8, 9, 10, 11 or 12 bundles or single yarns. Even more preferably, the yarn is build form only 3, 4, 5, 6 or 7 bundles or single yarns.

In yet another embodiment, the yarn used in the knitted fabric is built from 3 or 7 fiber bundles or single yarns. Use of 3 or 7 bundles or single yarns in a yarn provides a yarn which more or less resembles a perfectly round circle, which surprisingly proved to provide even better performing knitted fabrics which reduce, in use, the markings on the bent glass surface.

In yet another preferable embodiment, the yarn comprises three or more bundles or single yarns where all fibers in a bundle or single yarn are made out of one fiber type. Even more preferred, the yarn comprises at least one metal fiber bundle or single yarn and at least one glass fiber bundle or single yarn. Use of yarns in knitted fabrics comprising at least one bundle of metal fibers and at least one bundle of glass fibers gives a better result in optical distortion than yarns completely made of metal fiber bundles. The tubular fabric sleeve is preferably made on a double flat bed weft knitting machine. In another preferred embodiment, the tubular or circular fabric is made on a circular knitting machine.

Advantage of a circular or tubular knitted structure is that it is a seamless sleeve which can be arranged around a roller by simply inserting the roller into the sleeve. Absence of a seam results in reduction of the risk that the glass panel becomes damaged when passing over the rollers.

The metal is preferably a steel and the steel is preferably stainless steel as it has good properties for coverings to be used in glass furnaces. Experiments have proven to give very good results for the above-mentioned ratio's of stainless steel fibres and glass fibres.

The stainless steel is a stainless-steel alloy, such as a 316 alloy, like 316L, or a 347 alloy, an Inconnel® or a Fecralloy®. An Inconnel® is a nickel chromium iron alloy. A Fecralloy® is a stainless steel comprising iron, chromium, aluminium and yttrium.

The glass is preferably an E-glass but can also be an S-glass or quartz.

The invention sleeve can be used to cover:
- one or more rollers are made of ceramic material; and/or
- one or more rollers having a diameter of at least 4.5 cm, such as 4.5-7 cm; and/or
- one or more rollers being arranged at pitch of 7-15 cm, such as 9-11 cm; and/or
- one or more rollers which are rigid and have a straight longitudinal axis; and/or
- one or more rollers inside a heating furnace..

In the art, sometimes non-straight rollers are used for the bending operation of the glass. The sleeve according to the invention is not adapted for the bending operation.

The length of the furnace may be more than 10 m, such as about 20 m; and/or the heating device may be arranged to heat the heating zone to a temperature of at least 500 °C, such as 500 - 900 °C, preferably to a temperature of 550 - 750 °C.

### Brief description of the figures in the drawing

The present invention will be explained further, with reference to the drawing. In this drawing:
Figure 1 shows a schematic view of a glass panel treating system comprising a heating system;
Figure 2 shows a schematic view in perspective of a roller of the heating system of figure 1; and
Figure 3a, Figure 3b and Figure 3c all show a cross-sections of a yarn used in a sleeve according to the invention..

### Mode for carrying out the invention

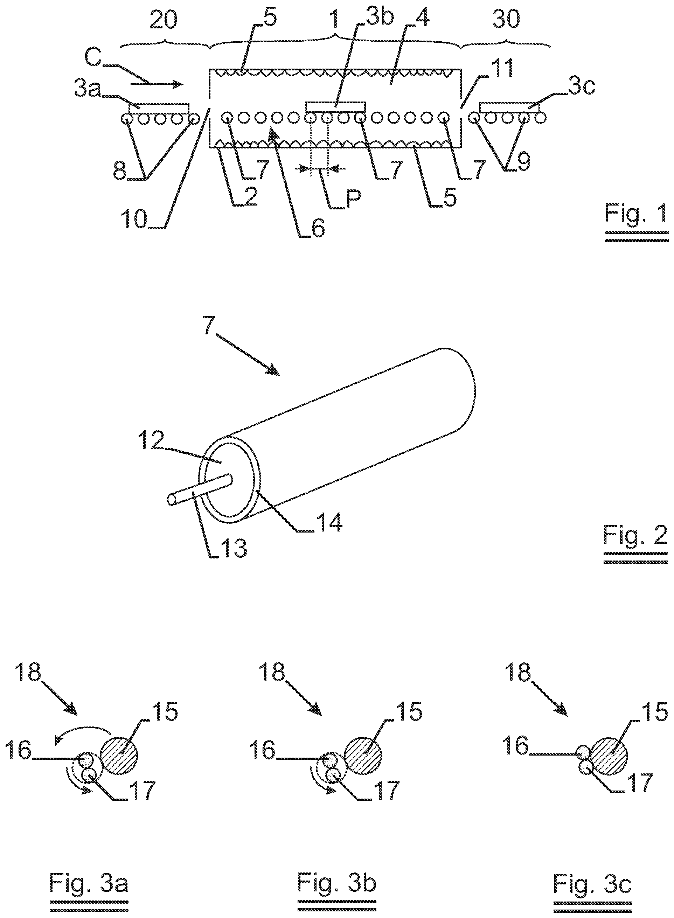

Figure 1 shows a system for treating glass panels. This system comprises a heating system 1 with on the left a feeding station 20 for feeding glass panels 3a to be heated to the heating system. On the right of the heating system 1 a treatment station 30 is provided for treating glass panels 3c coming from the heating device 1. The feeding station 20 comprises a roller conveyor with rollers 8 and the treatment station comprises a roller conveyor with rollers 9. The treatment in the treatment station might be of all types, such as bending, tempering, coating, cooling etcetera, which are usually for glass panels.

The heating system 1 according to the invention comprises basically a furnace 2 defining a heating zone 4 inside said furnace; a heating device 5 for heating the heating zone inside the furnace 2; and a roller conveyor 6. The roller conveyor 6 comprises rollers 7 and extends through the heating zone 4. The furnace 2 has a feeding port 10 for feeding glass panels 3a to be heated into the furnace 2. The furnace 2 further has a discharging port 11 for discharging panels 3b heated in the furnace from the furnace to a next station, in this example a treatment station 30.

The roller conveyor 6 extends between the feeding port 10 and the discharge port 11. The roller conveyor 6 thus lies inside the furnace 2. As will be clear, the conveyor with rollers 8 of the feeding station, the conveyor 6 of the heating system 1 and the conveyor with rollers 9 of the treatment station might be one conveyor assembly. The roller conveyor 6 then is the part of the conveyor assembly inside the furnace.

As shown schematically in figure 2, the rollers 7 of the roller conveyor 6 are provided with a fabric 14 covering the roller body 12. The roller body 12 is supported on a shaft 13. The roller body 12 is in this example made of ceramic material because of its good properties for use in a glass panel furnace.

Figure 3a shows a cross-section of a first embodiment of a yarn 18 used in a sleeve according to the invention.

The yarn 18 comprises two bundles 16 and 17 of glass fibres. The bundles 16 and 17 which are twisted around one another. This twisted assembly 16, 17 is twisted again around a bundle 15 of stainless steel fibres.

Figure 3b shows a cross-section of a second embodiment of a yarn 18 used in a sleeve according to the invention.

The yarn 18 again comprises two bundles of 16 and 17 of glass fibres. The bundles 16 and 17 are twisted around one another. This twisted assembly 16, 17 is running parallel to a bundle 15 of stainless steel fibres.

Figure 3c shows a cross-section of a third embodiment of a yarn 18 used in a sleeve according to the invention.

The yarn 18 again comprises two bundles of 16 and 17 of glass fibres. The bundles 16 and 17 are not twisted around one another and run parallel to one another. This assembly 16, 17 is then running parallel to a bundle 15 of stainless steel fibres.

### Example

As an example of a fabric for covering a roller of a roller conveyor inside a glass panel heating device, the following characterization of the fabric can be given:
- the fabric is an 1/1 single bed, circular knitted structure;
- the yarn(s) used in the knitted fabric consists of one stainless steel filament and two glass filaments, which are twisted together;
- each yarn comprises about 32 wt% glass and about 68 wt% stainless steel;
- the stainless steel is a 316 alloy;
- the diameter of the stainless steel filament is 12 µm;
- the diameter of both the glass filaments is 7 µm;
- the glass filaments are a E-glass fibre;
- the thickness of the sleeve is 0,93 mm;
- the weight of the fabric is about 600 g/m².

### List of Reference Numbers

- 1: heating system
- 2: furnace
- 3a: glass panel
- 3b: glass panel
- 3c: glass panel
- 4: heating zone
- 5: heating device
- 6: conveyor
- 7: roller
- 8: roller
- 10: feeding port
- 11: discharge port
- 12: roller body
- 13: shaft
- 14: fabric
- 15: bundle of steel fibres
- 16: first bundle of glass fibres
- 17: second bundle of glass fibres
- 18: yarn
- 20: feeding system
- 30: treatment station

## Claims

1. A sleeve for covering a roller for conveying glass panels, said sleeve being a fabric, said fabric comprising yarns, said yarns comprising both glass fibres or ceramic fibres and metal fibres, in which said fabric is a tubular fabric.

2. A sleeve according to claim 1, said fabric comprising between 10 weight per cent and 50 weight per cent glass fibres or ceramic fibres, the remainder being metal fibres.

3. A sleeve according to claim 1 - 2, wherein said fabric is a knitted fabric.

4. A sleeve according to claim 3, wherein said fabric is a tubular knitted fabric.

5. A sleeve according to claim 3 or 4, wherein said fabric is a weft knitted fabric.

6. A sleeve according to claims 1-5, said fabric having one or more yarns, each yarn having one or more bundles, each of said one or more bundles comprising both glass fibres or ceramic fibres and metal fibres.

7. A sleeve according to claims 1 to 5, wherein said fabric having one or more yarns, each yarn having three bundles, one bundle comprising metal fibres, the other two bundles comprising glass fibres or ceramic fibres.

8. A sleeve according to claim 7, wherein the two bundles with the glass fibres or the ceramic fibres are twisted with each other.

9. A sleeve according to claim 7 or claim 8, wherein the bundle with the metal fibres is twisted with the bundles with the glass fibres or the ceramic fibres.

10. A sleeve according to claims 3 - 5, wherein at least one of said yarns of said knitted fabric is comprising at least 3 fiber bundles, wherein said at least one yarn is comprising at least one fiber bundle comprising metal fibers, said fiber bundles each being defined by an equivalent bundle diameter, **characterised in that** said equivalent bundle diameter of each of said fiber bundles in said yarn are equal to each other or differ maximally 40%.

11. A sleeve according to claim 6, wherein said equivalent bundle diameters of each of said fiber bundles in said yarn differ maximally 10%.

12. Use of a sleeve according to any one of the preceding claims as a cover of a conveyor roller in a heating system for glass panels.

13. Use according to claim 12 inside a heating furnace.

14. Use according to claim 12 or claim 13 as a cover for a straight conveyor roller.

## Patentansprüche

1. Ummantelung zum Abdecken einer Rolle zum Transportieren von Glasplatten, wobei es sich bei der Ummantelung um ein Gewebe handelt, das Garne umfasst, welche sowohl Glas- oder Keramikfasern als auch Metallfasern umfassen, wobei es sich bei dem Gewebe um ein schlauchförmiges Gewebe handelt.

2. Ummantelung nach Anspruch 1, wobei das Gewebe zwischen 10 und 50 Gewichtsprozent Glas- oder Keramikfasern umfasst und es sich bei dem Rest um Metallfasern handelt.

3. Ummantelung nach Anspruch 1 bis 2, wobei es sich bei dem Gewebe um ein Gewirk handelt.

4. Ummantelung nach Anspruch 3, wobei es sich bei dem Gewebe um ein schlauchförmiges Gewirk handelt.

5. Ummantelung nach Anspruch 3 oder 4, wobei es sich bei dem Gewebe um Kulierware handelt.

6. Ummantelung nach den Ansprüchen 1 bis 5, wobei das Gewebe ein oder mehrere Garne aufweist, jedes Garn ein oder mehrere Bündel aufweist und jedes des einen oder der mehreren Bündel sowohl Glas- oder Keramikfasern als auch Metallfasern umfasst.

7. Ummantelung nach den Ansprüchen 1 bis 5, wobei das Gewebe ein oder mehrere Garne aufweist, jedes Garn drei Bündel aufweist, ein Bündel Metallfasern umfasst und die beiden anderen Bündel Glas- oder Keramikfasern umfassen.

8. Ummantelung nach Anspruch 7, wobei die beiden Bündel mit den Glas- oder den Keramikfasern miteinander verzwirnt sind.

9. Ummantelung nach Anspruch 7 oder Anspruch 8, wobei das Bündel mit den Metallfasern mit den Bündeln mit den Glas- oder den Keramikfasern verzwirnt ist.

10. Ummantelung nach den Ansprüchen 3 bis 5, wobei mindestens eines der Garne des Gewirks mindestens drei Faserbündel umfasst, wobei das mindestens eine Garn mindestens ein Faserbündel mit Metallfasern umfasst, wobei die Faserbündel jeweils durch einen äquivalenten Bündeldurchmesser definiert sind, **dadurch gekennzeichnet, dass** der äquivalente Bündeldurchmesser jedes der Faserbündel bei dem Garn gleich ist oder sich um maximal 40% unterscheidet.

11. Ummantelung nach Anspruch 6, wobei sich die äquivalenten Bündeldurchmesser jedes der Faserbündel bei dem Garn um maximal 10% unterscheiden.

12. Verwendung einer Ummantelung nach einem der vorhergehenden Ansprüche als Abdeckung einer Transportrolle in einem Heizsystem für Glasplatten.

13. Verwendung nach Anspruch 12 in einem Heizofen.

14. Verwendung nach Anspruch 12 oder Anspruch 13 als Abdeckung für eine gerade Transportrolle.

## Revendications

1. Manchon destiné à recouvrir un rouleau pour le transport de plaques de verre, ledit manchon étant un tissu, ledit tissu comprenant des fils, lesdits fils comprenant à la fois des fibres de verre ou des fibres de céramique et des fibres métalliques, dans lequel ledit tissu est un tissu tubulaire.

2. Manchon selon la revendication 1, ledit tissu comprenant de 10 % en poids à 50 % en poids de fibres de verre ou de fibres de céramique, le reste étant des fibres métalliques.

3. Manchon selon la revendication 1 ou 2, dans lequel ledit tissu est un tissu tricoté.

4. Manchon selon la revendication 3, dans lequel ledit tissu est un tissu tricoté tubulaire.

5. Manchon selon la revendication 3 ou 4, dans lequel ledit tissu est un tissu à mailles cueillies.

6. Manchon selon les revendications 1 à 5, ledit tissu comportant un ou plusieurs fils, chaque fil comportant un ou plusieurs faisceaux, chacun desdits un ou plusieurs faisceaux comprenant à la fois des fibres de verre ou des fibres de céramique et des fibres métalliques.

7. Manchon selon les revendications 1 à 5, dans lequel ledit tissu comporte un ou plusieurs fils, chaque fil comporte trois faisceaux, un faisceau comprenant des fibres métalliques, les deux autres faisceaux comprenant des fibres de verre ou des fibres de céramique.

8. Manchon selon la revendication 7, dans lequel les deux faisceaux comprenant les fibres de verre ou les fibres de céramique sont torsadés l'un avec l'autre.

9. Manchon selon la revendication 7 ou la revendication 8, dans lequel le faisceau comprenant les fibres métalliques est torsadé avec les faisceaux comprenant les fibres de verre ou les fibres de céramique.

10. Manchon selon les revendications 3 à 5, dans lequel au moins l'un desdits fils dudit tissu tricoté est constitué d'au moins 3 faisceaux de fibres, dans lequel ledit au moins un fil est constitué d'au moins un faisceau de fibres comprenant des fibres métalliques, lesdits faisceaux de fibres étant chacun délimité par un diamètre de faisceau équivalent, **caractérisé en ce que** lesdits diamètres de faisceaux équivalents de chacun desdits faisceaux de fibres dans ledit fil sont égaux les uns aux autres ou diffèrent d'au maximum 40 %.

11. Manchon selon la revendication 6, dans lequel lesdits diamètres de faisceaux équivalents de chacun desdits faisceaux de fibres dans ledit fil diffèrent d'au maximum 10 %.

12. Utilisation d'un manchon selon l'une quelconque des revendications précédentes comme couverture d'un rouleau de transport dans un système de chauffage pour plaques de verre.

13. Utilisation selon la revendication 12 à l'intérieur d'un four chauffant.

14. Utilisation selon la revendication 12 ou la revendication 13 comme couverture pour un rouleau de transport rectiligne.
